# FASCICULE DE BREVET EUROPEEN

(11) **EP 0 755 488 B1**
(45) Date de publication et mention de la délivrance du brevet: **23.05.2001**
(21) Numéro de dépôt: 96903055.0
(22) Date de dépôt: 06.02.1996
(51) Int. Cl.: F16D 25/08

(54) **BUTEE DE DEBRAYAGE A COMMANDE HYDRAULIQUE POUR UN EMBRAYAGE A DIAPHRAGME DE VEHICUCLE AUTOMOBILE**
HYDRAULISCH BETÄTIGTES AUSRÜCKLAGER FÜR KRAFTFAHRZEUGKUPPLUNG MIT MEMBRANFEDER
HYDRAULICALLY CONTROLLED RELEASE BEARING FOR A MOTOR VEHICLE DIAPHRAGM CLUTCH

(30) Priorité: 09.02.1995 FR 9501700; 14.09.1995 FR 9510750
(43) Date de publication de la demande: 29.01.1997
(73) Titulaire: VALEO, 75017 Paris (FR)
(72) Inventeur: THOMIRE, Sylvain, F-92300 Levallois (FR); GIROIRE, Jean-Pierre, F-78100 Saint-Germain-en-Laye (FR)
(86) Numéro de dépôt international: FR9600192
(87) Numéro de publication internationale: WO9624782

(56) Documents cités:
- EP-A- 0 095 841
- EP-A- 0 168 932
- DE-A- 3 504 086
- DE-A- 4 313 346
- GB-A- 2 287 295
- US-A- 3 004 438

## Description

La présente invention concerne les butées de débrayage, à commande hydraulique, pour embrayage à diaphragme, notamment pour véhicule automobile.

L'invention concerne plus particulièrement une butée de debrayage comportant une partie fixe comprenant un corps extérieur, définissant une cavité annulaire borgne d'orientation axiale propre à être alimentée en fluides et à l'intérieur de laquelle est monté mobile axialement un piston de forme tubulaire portant un élément d'attaque propre à agir sur le diaphragme d'un embrayage.

Une telle butée est décrite par exemple dans le document FR-A-2.692.950.

Cette butée peut être alimentée par un fluide du type gazeux ou liquide et c'est la raison pour laquelle elle est dénommée usuellement butée de debrayage à commande hydraulique.

Selon différentes conceptions connues, il est prévu des moyens pour fixer le tube de support interne sur un élément fixe, par exemple sur le carter de la boîte de vitesses équipé d'un embrayage comportant une telle butée de débrayage à commande hydraulique concentrique, et il est également prévu des moyens pour fixer le corps extérieur sur cette même pièce fixe, une concentricité la plus précise possible de ces deux éléments de la partie fixe de la butée devant également être assurée.

Dans le document EP-A-0 168 932, conforme au préambule de la revendication 1, on a proposé une butée de débrayage du type mentionné précédemment dans laquelle le tube de support interne présente à son extrémité arrière un flasque annulaire d'orientation transversale par l'intermédiaire duquel il s'appuie sur une partie fixe, notamment sur une boîte de vitesses. L'extémité arrière du corps est entaillée pour serrage du flasque entre le corps et ladite partie fixe.

En pratique dans ce document le tube est fixé au corps avant fixation sur la partie fixe.

La présente invention a pour objet de simplifier la fixation et le positionnement des deux composants de la partie fixe. Ce problème est résolu selon l'inventeur par la partie caractérisante de la revendication 1.

Ainsi, la fixation du corps extérieur permet d'assurer simultanément la fixation du tube intérieur de support et d'abaisser le prix de revient de la butée de débrayage.

Plus précisément on assure une fixation par pincement du tube avec un centrage du tube grâce à son bourrelet et un centrage du corps grâce au flasque.

Selon d'autres caractéristiques de l'invention
- le flasque comporte un décrochement axial qui sert de centreur au corps extérieur ;
- un joint annulaire d'étanchéité est intégré entre les parties en vis-à-vis du flasque annulaire et du corps extérieur ;
- le corps extérieur est étagé avec formation d'un épaulement transversal et présente une portion tubulaire servant au centrage d'un ressort de précharge agissant entre l'épaulement du corps extérieur et un épaulement d'un flasque annulaire appartenant au piston ;
- le tube intérieur porte une butée pour limiter le déplacement du piston et former avant montage de la butée de débrayage sur sa partie fixe un ensemble unitaire.

D'une manière générale, le tube intérieur peut être moins épais que dans une réalisation classique.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en coupe axiale d'un embrayage pour véhicule automobile équipé de la butée de débrayage qui n'est pas selon l'invention ;
- la figure 2 est une vue de face du corps extérieur de la butée de débrayage de la figure 1 ;
- la figure 3 est une vue partielle à plus grande échelle de la partie centrale de la figure 1 ;
- la figure 4 est une vue partielle des moyens d'assemblage entre le tube intérieur et le manchon de guidage;
- la figure 5 est une vue partielle en coupe axiale montrant les moyens d'assemblage entre le tube intérieur et le manchon de guidage ;
- la figure 6 est une vue similaire à celle de la figure 3 qui illustre un mode de réalisation selon l'invention de la fixation du tube intérieur par l'intermédiaire du corps extérieur ;
- la figure 7 est une demi-vue analogue à la figure 6 pour un autre exemple de réalisation.

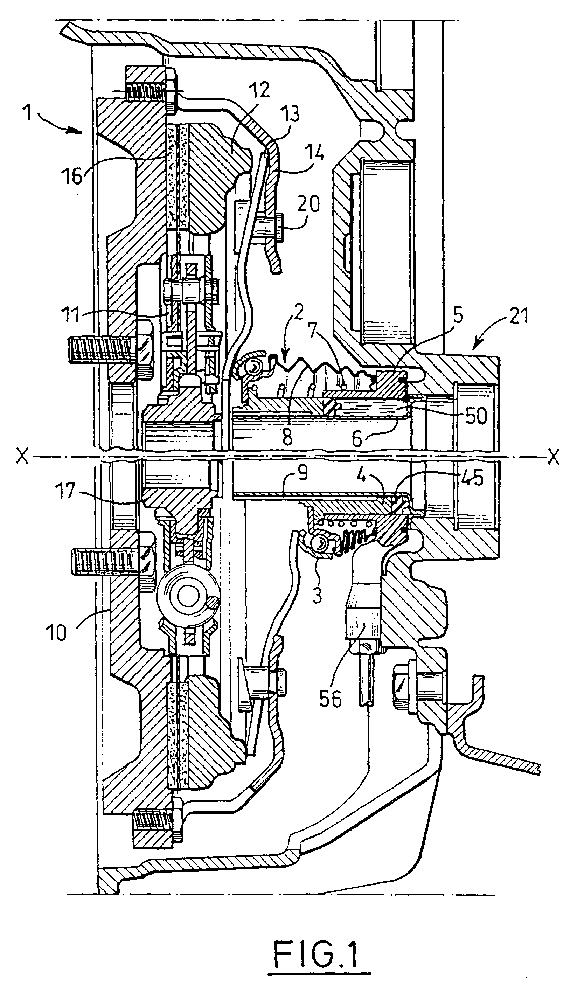

Le mode de réalisation des figures 1 à 5 est utile pour la compréhension de l'invention.

A la figure 1 on voit en 1 un embrayage comportant, successivement axialement, un plateau de réaction 10, un disque de friction 11, un plateau de pression 12, un diaphragme 13 et un couvercle 14 en forme d'assiette creuse.

Le plateau de réaction 10 est destiné à être fixé, ici par des vis, sur un arbre menant non visible, ici le vilebrequin du moteur du véhicule automobile, et offre une face de friction aux garnitures de friction 16, que présente le disque de friction 11 à sa périphérie externe.

Ce disque de friction 11 présente à sa périphérie interne un moyeu cannelé 17 par l'intermédiaire duquel il est calé en rotation sur l'arbre d'entrée 18 de la boîte de vitesses 21, ledit arbre 18 étant représenté partiellement en pointillés à la figure 3.

Le plateau de pression 12 offre une face de friction au disque de friction 11 et est lié en rotation au couvercle 14 en étant monté mobile axialement par rapport à celui-ci, et de manière connue en soi, par l'intermédiaire de languettes tangentielles (non visibles).

Le couvercle creux 14 entoure ici les garnitures 16, le plateau de pression 12 et le diaphragme 13.

Il est fixé, par son rebord radial, à sa périphérie externe sur le plateau de réaction 10, ici par des vis (non représentées).

Le diaphragme 13 présente, de manière connue en soi, une partie périphérique externe en forme de rondelle Belleville et une partie centrale fragmentée en doigts radiaux par des fentes débouchant intérieurement dans l'ouverture centrale du diaphragme et extérieurement dans des orifices élargis implantés à la périphérie interne de la rondelle Belleville du diaphragme.

Ces orifices sont traversés par des colonnettes 20 fixées sur le fond du couvercle 14 troué centralement.

Les colonnettes 20 offre un appui secondaire à la périphérie interne de la rondelle Belleville du diaphragme 13, en regard d'un appui primaire formé par emboutissage dans le fond du couvercle 14.

A la périphérie externe de sa rondelle Belleville, le diaphragme 13 de forme tronconique à l'état libre, prend appui sur un bossage annulaire fragmenté non référencé du plateau de pression 12.

Ainsi, grâce aux colonnettes 20, le diaphragme 13 est monté de manière pivotante sur le couvercle 14 entre ses appuis primaire et secondaire et l'embrayage est normalement engagé, le diaphragme 13 prenant appui sur l'appui primaire du couvercle 14 pour solliciter le plateau de pression 12 en direction du plateau de réaction 10 afin de serrer les garnitures de friction 16 du disque 11 entre les plateaux de pression 12 et de réaction 10.

Le couple est ainsi transmis du vilebrequin à l'arbre d'entrée de la boîte de vitesses 21, via les garnitures 16 accouplées ici de manière élastique au moyeu 17.

Pour désengager l'embrayage, de manière connue en soi, il faut agir ici en poussant à l'aide de la butée de débrayage 2 sur l'extrémité interne des doigts du diaphragme 13 pour faire pivoter celui-ci et faire annuler la charge qu'exerce le diaphragme 13 sur le plateau de pression 12, les languettes élastiques rappelant alors le plateau de pression 12 en direction du fond du couvercle 14 afin de libérer les garnitures de friction 16 du disque 11.

Ici la butée de débrayage 2 comporte un élément d'attaque 3 propre à agir sur l'extrémité interne des doigts du diaphragme 13, une partie mobile à savoir un piston 4 mobile axialement agissant sur l'élément d'attaque 3 pour manoeuvrer celui-ci, une partie fixe 5, 6 ici en deux pièces 5, 6, définissant avec le piston 4 une chambre de commande 50, des moyens élastiques de précharge 7 interposés entre la partie fixe 5, 6 et le piston 4 pour solliciter en permanence l'élément d'attaque 3 au contact des doigts du diaphragme 13 afin d'exercer une précharge de faible valeur sur le diaphragme 13, un soufflet de protection 8 et un manchon de guidage 9 pour guider le piston 4 lors de son mouvement axial.

La chambre de commande 50 est étanche de manière décrite ci-après, pour introduction dans celle-ci d'un fluide de commande, telle que de l'air ou de l'huile, permettant de pressuriser ou de dépressuriser celle-ci afin de déplacer axialement le piston 4 et l'élément d'attaque 3.

Par simplicité la butée 2 sera dénommée butée de débrayage à commande hydraulique, le fluide de commande pouvant être de nature gazeuse ou liquide.

Ici l'élément d'attaque consiste en un roulement à billes doté d'une bague externe 33 tournante et profilée pour venir localement au contact singulier de l'extrémité des doigts du diaphragme 13.

Dans l'exemple de réalisation les doigts sont plans en sorte que la bague externe du roulement 33 a, en section, un profil bombé.

Bien entendu l'inverse est possible, les doigts du diaphragme 13 ayant une extrémité interne bombée, tandis que la bague externe 33 du roulement 3 a alors une forme plate.

Tout cela dépend des applications sachant qu'un contact ponctuel (circulaire) est recherché.

La bague interne 34 du roulement 3, ici en tôle, présente un rebord annulaire transversal 31, dit rebord interne du roulement 3, dirigé radialement vers l'axe de la butée 2 pour son attelage au piston 4.

Le piston 4 a une forme tubulaire et présente transversalement à son extrémité avant un flasque annulaire transversal 41 dirigé radialement en direction opposée à l'axe X-X de l'ensemble.

Le piston 4 est en matière moulable, par exemple, à base d'aluminium ou en matière plastique.

Ici le piston 4 est en matière plastique présentant un faible coefficient de frottement pour faciliter son déplacement.

C'est sur la face avant du flasque 41, adjacente au roulement 3, que s'appuie le rebord 31 du roulement 3.

Le rebord 31 est soumis à l'action d'une rondelle élastique à action axiale 32, dite rondelle d'autocentrage, qui s'appuie à sa périphérie externe sur ledit rebord.

Ici la rondelle d'autocentrage 32 est une rondelle de forme tronconique dont la périphérie interne est fragmentée en pattes inclinées qui prennent appui contre le flanc, le plus éloigné du flasque 41, d'une gorge 42 pratiquée dan le piston 4, entre l'extrémité libre de celui-ci et le flasque 41.

La rondelle 32 a ainsi en section une forme de dièdre et permet de serrer le rebord 31 au contact du flasque 41.

Ici la hauteur du rebord 31 est supérieure au diamètre des billes du roulement 3.

Ainsi l'élément d'attaque 3 est attelé axialement au piston tout en ayant la possibilité de se déplacer radialement par rapport à celui-ci.

Il est donc créé, de manière connue en soi, une butée de débrayage autocentreuse permettant au roulement 3 de cheminer radialement pour s'autocentrer par rapport au diaphragme 13, la charge de serrage exercée par la rondelle 32 dépendant des applications en étant tarée pour que le roulement ne tombe pas sous l'effet de son propre poids.

La chambre de commande 50 est délimitée par deux pièces 5, 6 fixes en relation de cylindre-piston avec le piston 4 mobile axialement, à savoir un tube intérieur 6 et un corps extérieur 5 concentriques.

Les pièces 5, 6 appartiennent donc à la partie fixe 5, 6 précitée.

L'une de ces pièces consiste donc en un tube intérieur de guidage et de support 6 entourant l'arbre d'entrée 18 de la boîte de vitesses 21.

Ce tube 6, ici métallique qui est par exemple réalisé par emboutissage et/ou repoussage, présente au niveau de son extrémité arrière 100 un flasque annulaire 61 d'orientation transversale, radialement vers l'extérieur, par l'intermédiaire duquel il s'appuie sur la boîte de vitesses 21 en étant adossé à celle-ci contre une face transversale annulaire 102 agencée en vis-à-vis dans la boîte de vitesses 21.

Ce tube 6 présente un bourrelet annulaire de centrage 62 pratiqué dans son flasque 61 par pliage. Ici le bourrelet 62 s'étend globalement depuis une partie médiane du flasque 61.

Ce bourrelet 62 d'orientation axiale parallèle à l'axe X-X pénètre dans l'ouverture 63, réalisée par exemple sous la forme d'un alésage interne de la boîte de vitesses 21, pour passage de son arbre d'entrée.

Le bourrelet 62 est en contact intime avec l'alésage interne formant l'ouverture 63 en sorte qu'il est centré par ledit alésage 63 et le carter de la boîte de vitesses 21.

Un joint d'étanchéité 64 intervient à la périphérie interne du bourrelet 62 pour, de manière connue en soi, éviter une fuite d'huile de la boîte de vitesses, ledit joint 64 étant interposé radialement entre le bourrelet 62 et l'arbre d'entrée 18 de la boîte de vitesses 21.

Un joint annulaire d'étanchéité 104 est également interposé entre la face transversale avant 106 du flasque 61 et la face transversale annulaire arrière 108 de la collerette radiale extérieure 53 formée à l'arrière du tube extérieur 5.

Le joint annulaire d'étanchéité 104 (ici torique) est de préférence agencé dans une gorge formée à cet effet dans la face annulaire transversale arrière 108.

La périphérie externe du flasque 61, c'est-à-dire la tranche externe de celui-ci, sert de centreur au corps extérieur 5 constituant l'autre pièce de la partie fixe 5, 6.

Le corps 5 présente latéralement deux oreilles 51 trouées et globalement diamétralement opposées.

C'est par l'intermédiaire de ces oreilles 51 que le corps 5 est fixé, ici à l'aide de vis 110 sur le carter 21 de la boîte de vitesses.

L'extrémité arrière du corps 5 est entaillée, c'est-à-dire qu'il est prévu un lamage 112 réalisé par fraisage dans sa face transversale annulaire arrière 108, en ayant en section une forme d'équerre pour centrage du corps 5 sur la périphérie externe du flasque 61, ici métallique, et serrage du flasque 61 entre le corps 5 et le carter de la boîte de vitesses 21.

Conformément aux enseignements de l'invention, le tube intérieur 6 est ainsi fixé par pincement au carter 21 de la boîte de vitesses par l'intermédiaire du corps extérieur 5 avec ses moyens de fixation.

En même temps qu'une fixation simultanée des pièces 5 et 6, on assure un centrage du tube intérieur 6 par l'intermédiaire de son bourrelet 62 dans l'alésage 63, et un centrage relatif du corps extérieur 5, sur le tube intérieur 6 par l'intermédiaire du lamage 112 qui reçoit le flanc transversal 61.

Pour une bonne répartition des efforts et un centrage optimal, on notera que le diamètre moyen du bourrelet de centrage 62 est sensiblement égal au diamètre de l'alésage intérieur 114 du corps 5 qui reçoit le piston en coulissement.

Le tube de support 6 s'étend en saillie axiale vers l'avant par rapport au corps 5.

Ce corps 5, ici en matière moulable, entoure le tube 6.

Il est donc de forme tubulaire et s'étend axialement en saillie axiale par rapport au carter de la boîte de vitesses 21 tout comme le tube 6.

Ainsi, la chambre 50 a une forme annulaire cylindrique d'orientation axiale en étant délimitée à sa périphérie externe par le corps tubulaire 5, à sa périphérie interne par le tube 6, à l'une de ses extrémités axiales par le flasque 61, formant le fond de chambre 50, et à l'autre de ses extrémités axiales par le piston mobile 4.

Ainsi le tube 6 ferme la chambre 50, le corps 5 étant ici à base d'aluminium.

Bien entendu le joint torique 104 intervient entre le flasque 61 et la face arrière entaillée du corps 5 pour l'étanchéité de la chambre 50.

En service des souillures, telles que des impuretés, des saletés ou autres peuvent se déposer au niveau du tube 6.

Afin d'éviter que ces souillures ne pénètrent dans la chambre 50, il est proposé de créer une chicane.

Ainsi l'extrémité avant du tube 6 (son extrémité libre) porte en surépaisseur le manchon de guidage 9 précité.

Le manchon 9 constitue une barrière obstruant l'accès des souillures au tube 6, à l'extrémité arrière 44 du piston 4 et à la chambre 50.

Ici le manchon 9 présente au niveau de son extrémité avant des crans de fixation 92 propres à s'engager de manière décrite ci-après dans des ouvertures complémentaires 65 pratiquées à l'extrémité avant du tube 6 qui sert de support au corps 5 et au manchon 9.

Au-delà du manchon 9, le tube 6 sert de guidage à l'extrémité arrière du piston 4 et à un joint 45 porté par ladite extrémité 44.

Ce joint 45 présente deux lèvres pour coopération respectivement avec l'alésage interne 114 du corps 5 et la périphérie externe 116 du tube 6.

Il présente centralement en saillie axiale un téton 47 propre à venir en butée contre le flasque 61 afin de diminuer les bruits.

Le joint 45 est rapporté sur l'extrémité arrière 44 du piston 4 à l'aide d'une pièce de centrage 46 de forme annulaire.

Cette pièce 46 est métallique et a en section une forme d'équerre avec une partie transversale ancrée (noyée) dans le joint 45 et une axiale engagée sur la périphérie externe du piston et pourvue de pattes inclinées et crantées obtenues par découpe et pliage.

Ces pattes s'engagent chacune grâce à leur cran dans une gorge pratiquée à la périphérie externe de l'extrémité arrière du piston 4.

Ainsi qu'on l'aura compris, le montage du joint 45 équipé de sa pièce 46 se fait par encliquetage, les pattes de la pièce 46 se déployant pour ensuite venir en prise avec le flanc de la gorge du piston 4 le plus près de la face arrière du piston 4.

Bien entendu le piston 4 présente extérieurement un changement de diamètre au niveau de son extrémité arrière 44 pour que la partie axiale de la pièce 46 ne fasse pas saillie par rapport à la périphérie externe du piston 4.

Le corps 5 est étagé en diamètre et présente une portion avant tubulaire 52 saillante axialement par rapport à une portion arrière 53 plus épaisse portant les oreilles 51.

Il ainsi formé extérieurement un épaulement transversal 54 au niveau des changements de diamètre du corps 5.

La périphérie externe de la portion 52 sert de centreur aux moyens élastiques de précharge 7 précités.

Ces moyens 7 consistent ici en un ressort à boudin prenant appui sur l'épaulement 54 et sur un épaulement transversal formé à la périphérie externe du flasque 41 du piston 4 sur la face dorsale dudit flasque.

Cet épaulement appartient à une creusure annulaire 49 réalisée à la périphérie externe du flasque 41.

Cette creusure 49 laisse apparaître une portée d'orientation axiale permettant un centrage de la dernière spire du ressort 7 d'orientation axiale.

La bague interne 34 du roulement 3 s'étend radialement au-dessus du flasque 41 et est prolongée à cette périphérie externe par un rebord 35, dit rebord externe du roulement 3, dirigé radialement en direction opposée à l'axe de l'ensemble.

Ce rebord 35 est également décalé axialement en direction opposée aux billes du roulement 3, ici étanche de manière connue en soi grâce à sa cage et à un joint non référencé à la figure 1.

Grâce à cette disposition on peut monter l'extrémité avant 81 du soufflet 8, ici de forme tronconique, sur le rebord externe 35 par emboîtement, l'extrémité avant 88 présentant une gorge annulaire de réception du rebord 35.

A son extrémité arrière de plus petit diamètre le soufflet 8 présente un bourrelet 82 propre a être pris en sandwich entre l'épaulement 54 et un rebord d'une pièce sinueuse 83.

C'est par l'intermédiaire de cette pièce 83, ici métallique, que le ressort 7 prend appui sur l'épaulement 54.

Autrement dit le ressort 7 permet de serrer la pièce 83 au contact de l'épaulement 54, ladite pièce 83 permettant, radialement au-delà du ressort 5, de serrer le bourrelet 82 de fixation du soufflet 88 au contact de l'épaulement 54.

On appréciera que le soufflet 8 en forme d'accordéon, entoure et protège le ressort 7, le piston 4 et la chambre 50 en empêchant l'introduction de souillures, saletés, impuretés ou autres.

Ainsi le soufflet 8 entoure le ressort 7, lequel entoure la portion tubulaire 52, le piston 4 et la chambre 50.

Ainsi la chambre 50 est bien protégée tant par le soufflet 8, que par le manchon de guidage 9.

Le ressort de précharge 7, le piston 4 avec son flasque 41, le manchon 9, le tube 6 et la portion tubulaire 52 sont implantés radialement en dessous de la partie principale de la bague interne 34 non tournante du roulement 3, ladite bague 34 étant globalement d'orientation axiale en étant dotée à sa périphérie interne du rebord 31 et sa périphérie externe du rebord 35.

Ainsi le piston 4, le ressort 7, la portion 52 sont logés en dessous de la partie principale de la bague 34 pour réduction de l'encombrement axial.

Ce ressort de précharge 7 s'appuie sur le flasque 41 selon une circonférence de diamètre supérieur à la circonférence selon laquelle s'appuie la rondelle d'autocentrage 32, qui est ainsi de taille réduite.

Ainsi le piston 4 présente à son extrémité avant un nez tubulaire 40 saillant axialement par rapport à son flasque 41 et permettant grâce à la gorge 42 le montage de la rondelle d'autocentrage 32, ainsi que de limiter le déplacement du rebord 31 et du roulement 3, un jeu radial prédéterminé existant entre l'alésage interne du rebord 31 et la périphérie externe du nez 40.

Les ressorts 32 et 7 exercent des efforts axiaux en sens opposé sur la flasque 41 ce qui est favorable à un bon coulissement du piston 4.

La partie principale de la bague interne 34 du roulement 3 est dirigée axialement vers le corps 5 et entoure également le flasque 41 en sorte que cela favorise une réduction de l'encombrement axial de la butée 2.

Grâce au rebord 31 on peut diminuer la hauteur du flasque 41 et former le nez 40.

L'alimentation de chambre 50 se fait par l'arrière, la portion arrière 53 plus épaisse du corps 5 portant transversalement en saillie deux embouts 56, 57 respectivement pour l'alimentation et la purge de la chambre 50.

Ces embouts 56, 57 s'étendent transversalement parallèlement à la face avant du carter de la boîte de vitesses 21.

Les embouts 56, 57 sont disposés de part et d'autre d'un trou de fixation (figure 1) pratiqué dans le carter de la boîte de vitesses 21.

Les canaux d'alimentation et de purge, ménagés dans les embouts 56, 57 comportent une portion transversale prolongée par une portion inclinée débouchant au niveau du flasque 61 et du tube 6 c'est-à-dire dans le fond de la chambre 50.

Cette disposition permet d'occuper au mieux l'espace disponible et de réduire l'encombrement axial de la butée 2, chaque embout 56, 57 ayant donc une partie d'orientation transversale prolongée par une partie inclinée de raccordement à l'extrémité arrière en forme de collerette 53 plus épaisse du corps 5.

On notera que les doigts du diaphragme 13 ont une zone intermédiaire bombée ce qui permet également de réduire l'encombrement axial.

Ainsi à la figure 1 on voit dans la partie haute de cette figure la butée 2 en position d'extraction lorsque l'embrayage est désengagé et en partie basse de cette figure la butée 2 en position rétractée lorsque l'embrayage est engagé.

Dans cette position rétractée la bague interne 34 du roulement 3 entoure en partie la portion 52 du corps 5 et le soufflet 8 de forme tronconique, est comprimé sans interférence avec les embouts 56, 57.

Ainsi qu'on le sait, la butée selon l'invention forme un récepteur du type concentrique asservi à un maître cylindre (non visible) piloté par la pédale de débrayage.

Ici le fluide de commande est de l'huile. Bien entendu le fluide peut être de nature gazeuse.

La butée de débrayage est réalisée sous la forme d'un sous ensemble grâce au ressort 7 maintenant le corps 5 en appui sur le flasque 61 et le piston 4 en appui sur l'extrémité arrière 91 du manchon 9.

Bien entendu le flasque 61 peut présenter des pattes (ou tenons) rentrant des mortaises complémentaires du corps 5 avec verrouillage par sertissage.

Ici l'extrémité avant du manchon 9 présente au moins un cran 91 et l'extrémité avant du tube 6 une échancrure ouverte complémentaire 65.

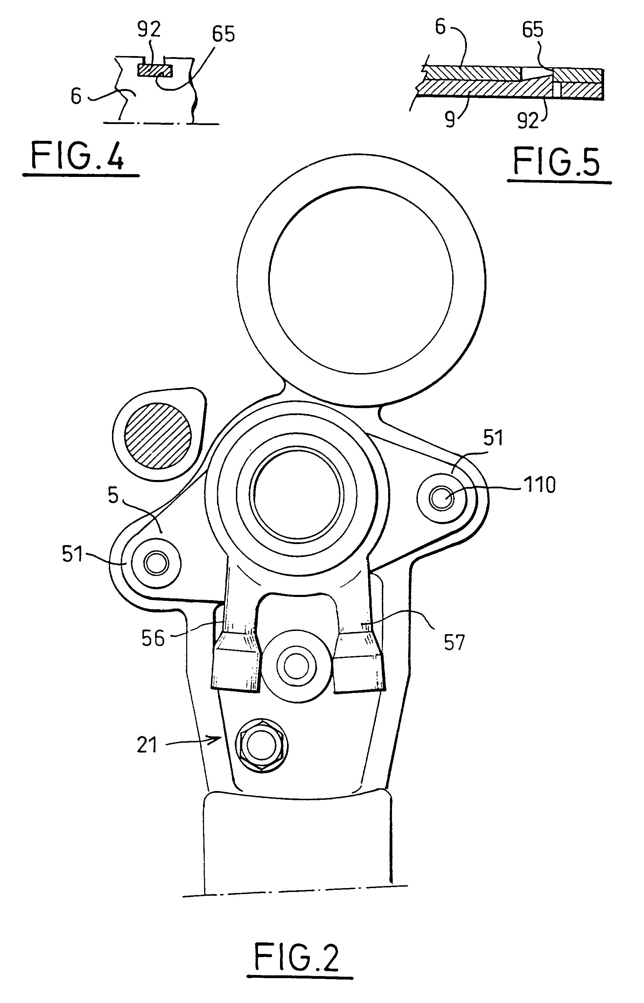

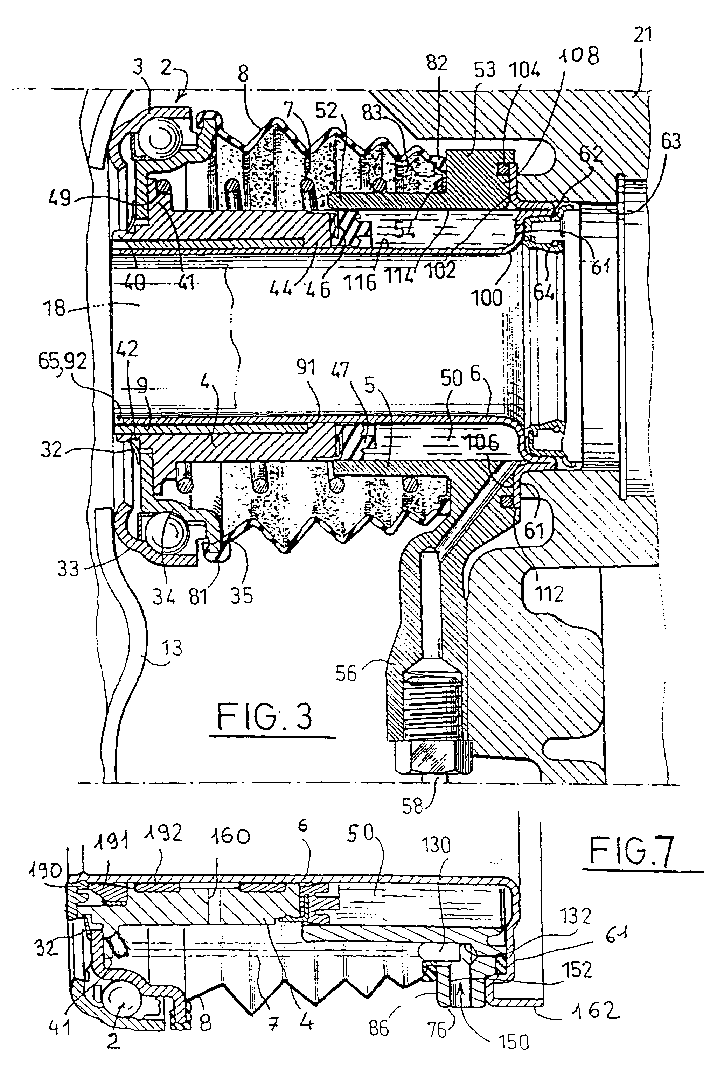

On engage le cran 92, formant tenon, dans l'échancrure 55 formant mortaise, en ayant un contact entre le cran et le fond de l'échancrure 65, puis on effectue un verrouillage en réalisant latéralement un sertissage faisant fluer la matière des bords latéraux de l'échancrure 55 (figure 4) dont les bords ont en section une forme de U.

Le manchon 9 est donc calé axialement et en rotation par sertissage et liaison de formes avec le tube 6.

En variante (figure 5) l'échancrure 65 peut être fermée et les crans 92 peuvent appartenir à des pattes longitudinales élastiquement déformables découpées du manchon.

Le montage se fait par encliquetage conduisant à une fixation axiale et en rotation du manchon 9.

En variante, l'échancrure est fermée et le cran 92 venu de moulage avec le manchon 9.

Le montage se fait alors par engagement à force.

Dans tous les cas on obtient une fixation du manchon 9 avec le tube 6.

De préférence on prévoit au moins deux crans 92 et deux échancrures 55 diamétralement opposées.

On appréciera que le corps 5 n'a pas besoin d'être usiné de manière précise, les portées de guidage du piston 4 étant formées par la périphérie externe du manchon 9 et par la périphérie externe 116 du tube 6, le joint 45 étant guidé par le tube 6 et l'alésage interne 114 du corps 5.

La réalisation et l'assemblage simplifié de la partie fixant deux pièces est préférable car le tube intérieur 6 peut avoir une épaisseur moindre que lorsque la partie fixe est monobloc.

Ce tube 6 est ainsi obtenu de manière économique.

En outre avec une partie fixe en deux pièces, on peut aisément réaliser les canaux d'alimentation et de purge associés aux embouts 56, 57 et ce par exemple par perçage vu l'implantation desdits canaux à l'arrière du corps extérieur 5 et leur inclinaison partielle.

Bien entendu la partie fixe peut être en trois parties à savoir un corps extérieur 5, un tube intérieur 6 et un fond relié au tube.

Dans ce cas, le manchon de guidage 9 peut être surmoulé sur le tube 6.

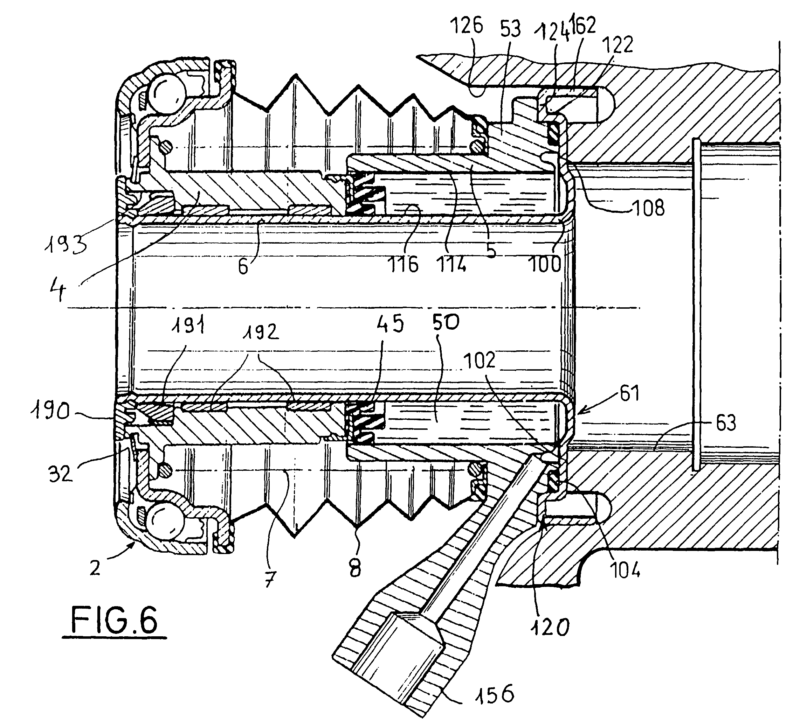

On décrira maintenant un mode de réalisation selon l'invention qui est illustré à la figure 6 sur laquelle des composants identiques ou similaires à ceux décrits précédemment sont désignés par les mêmes chiffres de référence.

Comme on peut le voir sur cette figure, le flasque transversal 61, qui prolonge le tube interne 6 à sa partie arrière 100, présente, en section transversale, un décrochement annulaire d'orientation axiale 120 qui délimite une portée 122 pour le centrage du corps 5 sur le tube 6 et qui est reçu dans une entaille de forme complémentaire 124 formée dans la face transversale arrière annulaire 108 du corps 5.

L'entaille 124 est donc délimitée par une portée annulaire d'orientation axiale sur laquelle s'emmanche à contact intime la portée 122, et par un épaulement transversal pour appui axial du décrochement 120 dirigé vers le piston 4.

Le flasque 61, au-delà de son décrochement 120 d'orientation axiale, se prolonge, en direction opposée au piston 4, par une partie d'orientation axiale en forme de douille 162 qui assure une fonction de centrage équivalente à celle du bourrelet 62 réalisé par pliage du premier mode de réalisation illustré aux figures 1 et 3.

Le bourrelet périphérique 162 (de forme annulaire) est ici reçu dans une portée cylindrique concave 126 réalisée dans le carter de la boîte de vitesses 21, la portée 126 pouvant être brute de moulage.

Le montage et le serrage simultané des pièces fixes 5 et 6 sont assurés, comme dans le cas du premier mode de réalisation, par serrage en position par ses brides (non représentées) du corps extérieur 5 sur la pièce fixe 21 du carter de la boîte de vitesses.

Il est bien entendu également possible d'agencer un joint d'étanchéité 64 (non représenté sur la figure 6) comme dans le cas du premier mode de réalisation.

On notera que les embouts d'alimentation 156 et de purge (non visible) s'étendent ici de manière inclinée et que le piston 4 présente deux bagues 192 fendues pour coulissement le long de la périphérie externe du tube intérieur. Dans ce cas le manchon 9 de la figure 1 est supprimé et le piston 4 porte à son extrémité libre un joint racleur 191 monté dans un logement 193 réalisé à l'extrémité libre du piston 4 à la faveur d'un changement de diamètre de son alésage interne. Le joint 191 évite les fuites d'huile en direction notamment des garnitures de friction du disque 11. Une bague 190 masque le logement 193.

Cette bague est montée sur le tube 6 par exemple de la même manière que le manchon 9 de la figure 1 c'est-à-dire notamment comme à la figure 4. Ici le montage est réalisé par encliquetage, la bague 193 présentant à sa périphérie interne un bourrelet s'engageant dans une gorge réalisée à l'extrémité libre du tube 6.

Comme à la figure 1 la bague 190, avantageusement en matière plastique, limite le mouvement du piston 4 par coopération avec la tranche de son extrémité libre.

Ainsi qu'on l'aura compris, la bague 190 ou le manchon 9 constitue une butée limitant le déplacement axial du piston 4 par coopération, soit avec l'épaulement 91, soit avec l'extrémité libre du piston 4.

Ainsi le joint 45 ne risque pas de s'échapper du corps 5.

Grâce à la butée 5,190, il est possible de former avant montage de la butée de débrayage 2 sur la partie fixe 21 du véhicule un ensemble unitaire manipulable et transportable grâce au ressort de précharge 7 agissant entre le piston 4 et le corps 5 tout en permettant un contact du piston 4 avec sa butée associée 9,190 et un contact du tube de support 6 avec la face arrière 108 de la collerette 53 du corps 5 centré alors par la périphérie externe du flasque 61 ou par le retour 120.

Le corps extérieur 6 est donc alors en butée contre le flasque 61.

On appréciera que la formation en deux parties 5,6 de la partie fixe facilite les usinages du corps 5 et la formation des canaux d'alimentation pour les embouts d'alimentation et de purge.

Bien entendu la bague extérieure 3 du roulement peut avoir une forme plane pour contact avec l'extrémité des doigts du diaphragme 13 alors de forme bombée.

Grâce au joint racleur 191 et aux bagues fendues 192 on protège la chambre 50 également contre la pénétration des impuretés en liaison avec la bague de butée 190 formant masque et chicane.

Compte tenu que le soufflet 8 délimite avec le piston 4, le corps 5 et le roulement 3, un logement étanche, il est possible de percer le piston d'un canal 160 (figure 7) pour recueillir les fuites d'huile présentes entre l'alésage interne du piston 4 et la périphérie externe du tube 6.

Grâce au joint racleur 191 les fuites d'huile pénètrent dans le logement étanche et peuvent être évacuées par un canal 150. Ce canal 150 en forme de L est réalisé alors dans la portion arrière 53 du corps 5 et comporte une partie axiale 132 et une partie transversale 152 pratiquée dans un embout 76 d'un seul tenant par moulage avec la portion arrière 53. Un conduit est branché sur l'embout 76 pour évacuer l'huile.

La partie 131 sert de logement à jeu au brin d'extrémité 130 d'orientation axiale du ressort de précharge 7 calé en rotation ainsi sur le corps 5. L'autre extrémité du ressort 7 comporte un brin incliné au contact du flasque 41 creusé pour recevoir ce brun.

Ainsi un calage en rotation du piston 4 est obtenu. Bien entendu par exemple à la figure 3, on peut réaliser un perçage axial dans la portion 53 pour montage du brin axial d'extrémité du ressort 7.

Ce montage de blocage en rotation du ressort 7 est transposable dans toutes les figures.

D'une manière générale le montage de la butée de débrayage est simple. En effet, on pose le support 6 sur le corps 5 ou vice versa, puis on enfile la pièce 83 avec mise en place du soufflet 8, après on enfile le ressort 7 puis le manchon 9 ou la butée 190. Enfin on monte le roulement 3, la rondelle 32 et l'autre extrémité du soufflet.

Bien entendu on peut d'abord monter le roulement sur le piston. En fonctionnement le piston 4 se déplace le long du tube intérieur 6 lorsque la chambre 50 est pressurisée. Il retourne à sa position rétractée sous l'action du diaphragme 13 (partie basse de la figure 1 chambre 50 dépressurisée).

Il ressort ainsi de la description et des dessins que la butée de débrayage 2 forme un récepteur du type concentrique asservi à un maître cylindrique piloté par la pédale de débrayage et que le piston 4 fait saillie axialement par rapport au corps extérieur 5 en coulissant axialement le long du tube de support interne 6 monté de manière concentrique par rapport au corps extérieur 5 en s'étendant en saillie axiale par rapport à celui-ci.

Le corps extérieur 5 et le tube intérieur 6 définissent donc une cavité annulaire borgne 50 d'orientation axiale propre à être alimentée en fluide sous pression.

A l'intérieur de cette cavité borgne, est monté mobile axialement le piston tubulaire délimitant la chambre de commande 50 formée en partie par ladite cavité borgne.

Bien entendu la butée de débrayage 2 peut ne pas être du type autocentreuse, le roulement 3 étant alors emmanché sur le piston 4.

## Revendications

1. Butée de débrayage à commande hydraulique pour embrayage (1) à diaphragme (13), notamment pour véhicule automobile, comportant une partie fixe (5,6) comprenant un corps extérieur (5) en matière moulable globalement de forme tubulaire avec une portion arrière plus épaisse (53) portant des oreilles (51) pour fixation dudit corps sur une partie fixe (21) et un tube de support interne (6) concentrique distinct du corps extérieur (5), et définissant une cavité annulaire borgne (50) d'orientation axiale propre à être alimentée en fluide et à l'intérieur de laquelle est monté mobile axialement un piston (4) de forme tubulaire portant un élément d'attaque (3) propre à agir sur le diaphragme (13) d'un embrayage (1), dans laquelle le tube de support interne (6) est un élément métallique réalisé par déformation notamment par emboutissage et/ou repoussage et présente à son extémité arrière (100) un flasque annulaire (61) d'orientation transversale par l'intermédiaire duquel il s'appuie sur la partie fixe (21), notamment sur une boîte de vitesses, ladite portion arrière du corps (5) étant entaillée (112,124) pour serrage du flasque (61) entre le corps (5) et ladite partie fixe (21), caractérisée en ce que ledit flasque annulaire (61) présente un bourrelet annulaire de centrage (162) d'orientation axiale pour centrage du tube interne de support (6) dans la partie fixe (21), telle que dans une ouverture (126) pratiquée dans la boîte de vitesses (21), en ce que le flasque (61) sert de centreur au corps extérieur (5), et en ce que le bourrelet annulaire de centrage (162) s'étend axialement depuis le bord périphérique externe du flasque annulaire (61).

2. Butée selon la revendication 1, caractérisée en ce que le flasque (61) comporte un décrochement annulaire d'orientation axiale (120,122) qui sert de centreur au corps extérieur (5).

3. Butée selon la revendication 2, caractérisée en ce que ledit décrochement (120,122) est reçu dans une entaille (124) de forme complémentaire formée dans la face transversale arrière annulaire (108) du corps extérieur (5) et en ce que le flasque (61) se prolonge au delà de son décrochement (120,122), en direction opposée au piston (4), par une douille (162) reçue dans une portée cylindrique concave (126) réalisée dans la ladite partie fixe (21).

4. Butée selon l'une quelconque des revendications précédentes, caractérisée en ce qu'un joint annulaire d'étanchéité (104) est interposé entre les parties en vis-à-vis du flasque annulaire (61) et du corps extérieur (5,108).

5. Butée selon l'une quelconque des revendications 1 à 4, caractérisée en ce que le corps extérieur (5) est étagé avec formation d'un épaulement transversal (54) et présente une portion tubulaire (52) servant au centrage d'un ressort de précharge (7) agissant entre l'épaulement (54) du corps extérieur (5) et un épaulement d'un flasque annulaire (41) appartenant au piston (4).

6. Butée selon la revendication 5, caractérisée en ce que le tube de support interne (6) porte une butée (9,190) pour limiter le déplacement du piston (4) et formation avant montage de la butée de débrayage (2) sur sa partie fixe (21) d'un ensemble unitaire grâce au ressort de précharge (7) maintenant le piston (4) au contact de ladite butée (9,190) et le corps extérieur (5) au contact du flasque (61) du tube intérieur de support(6).

## Patentansprüche

1. Hydraulisch betätigtes Ausrücklager für eine Kupplung (1) mit Membranfeder (13), insbesondere für Kraftfahrzeuge, umfassend einen ortsfesten Teil (5, 6), enthaltend einen im wesentlichen rohrförmigen Außenkörper (5) aus einem formbaren Werkstoff mit einem dickeren hinteren Abschnitt (53), der Lappen (51) für die Befestigung des besagten Körpers an einem ortsfesten Teil (21) trägt, und ein vom Außenkörper (5) verschiedenes konzentrisches inneres Tragrohr (6), das einen axial ausgerichteten ringförmigen Blindhohlraum (50) definiert, der mit Druckmedium befüllt werden kann und in dessen Innern axial beweglich ein rohrförmiger Kolben (4) gelagert ist, der ein Angriffselement (3) trägt, das auf die Membranfeder (13) einer Kupplung (1) einwirken kann, wobei das innere Tragrohr (6) ein durch Umformung, insbesondere durch Tiefziehen und/oder Drücken, ausgeführtes Metallelement ist und an seinem hinteren Ende (100) einen quer ausgerichteten ringförmigen Flansch (61) aufweist, über den es an dem ortsfesten Teil (21), insbesondere an einem Getriebe anliegt, wobei der besagte hintere Abschnitt des Körpers (5) eingekerbt (112, 124) ist, um die Einspannung des Flansches (61) zwischen dem Körper (5) und dem besagten ortsfesten Teil (21) zu ermöglichen,
**dadurch gekennzeichnet,**
daß der besagte ringförmige Flansch (61) einen axial ausgerichteten ringförmigen Zentrierwulst (162) zum Zentrieren des inneren Tragrohrs (6) im ortsfesten Teil (21) aufweist, insbesondere in einer in das Getriebe (21) eingearbeiteten Öffnung (126), daß der Flansch (61) als Zentrierelement für den Außenkörper (5) dient und daß sich der ringförmige Zentrierwulst (162) axial vom äußeren Umfangsrand des ringförmigen Flansches (61) aus erstreckt.

2. Ausrücklager nach Anspruch 1, **dadurch gekennzeichnet,** daß der Flansch (61) einen axial ausgerichteten ringförmigen Absatz (120, 122) umfaßt, der als Zentrierelement für den Außenkörper (5) dient.

3. Ausrücklager nach Anspruch 2, **dadurch gekennzeichnet,** daß der besagte Absatz (120, 122) in einer in der hinteren ringförmigen Querfläche (108) des Außenkörpers (5) ausgebildeten formschlüssigen Einkerbung (124) aufgenommen ist und daß der Flansch (61) jenseits seines Absatzes (120, 122) in der zum Kolben (4) entgegengesetzten Richtung durch eine Hülse (162) verlängert wird, die in einer in dem besagten ortsfesten Teil (21) ausgeführten konkaven zylindrischen Sitzfläche (126) aufgenommen ist.

4. Ausrücklager nach einem der vorangehenden Ansprüche, **dadurch gekennzeichnet,** daß zwischen den gegenüberliegenden Teilen des ringförmigen Flansches (61) und des Außenkörpers (5, 108) eine Ringdichtung (104) eingefügt ist.

5. Ausrücklager nach einem der Ansprüche 1 bis 4, **dadurch gekennzeichnet**, daß der Außenkörper (5) mit Bildung einer Querschulter (54) abgestuft ist und einen rohrförmigen Abschnitt (52) aufweist, der zur Zentrierung einer Vorspannfeder (7) dient, die zwischen der Schulter (54) des Außenkörpers (5) und einer Schulter eines ringförmigen Flansches (41) wirkt, der zum Kolben (4) gehört.

6. Ausrücklager nach Anspruch 5, **dadurch gekennzeichnet,** daß das innere Tragrohr (6) einen Anschlag (9, 190) trägt, um die Verschiebung des Kolbens (4) zu begrenzen und vor der Montage des Ausrücklagers (2) an seinem ortsfesten Teil (21) eine einheitliche Baugruppe dank der Vorspannfeder (7) zu bilden, die den Kolben (4) in Kontakt mit dem besagten Anschlag (9, 190) und den Außenkörper (5) in Kontakt mit dem Flansch (61) des inneren Tragrohrs (6) hält.

## Claims

1. A hydraulically controlled clutch release bearing for a clutch (1) having a diaphragm (13), especially for a motor vehicle, comprising a fixed part (5, 6) including an outer body (5) of mouldable material and of generally tubular form, with a thicker rear portion (53) carrying ears (51) for fastening the said body on a fixed part (21), together with a concentric internal support tube (6) distinct from the outer body (5) and defining an axially oriented blind annular cavity (50) arranged to be supplied with fluid, with a piston (4) of tubular form being mounted for axial movement within the blind cavity and carrying an actuating element (3) adapted to act on the diaphragm (13) of a clutch (1), wherein the internal support tube (6) is a metallic element formed by deformation, and in particular by press-forming and/or redrawing, and having at its rear end (100) a transversely oriented annular plate element (61) through which it bears on the fixed part (21), and in particular on a gearbox, the said rear portion of the body (5) being notched (112, 124) whereby the plate element (61) can be gripped between the body (5) and the said fixed part (21), characterised in that the said annular plate element (61) has an axially oriented annular centring bead (162) for centring the internal support tube (6) in the fixed part (21), for example in an aperture (126) formed in the gearbox (21), in that the plate element (61) serves as a centring means for the outer body (5), and in that the annular centring bead (162) extends axially from the outer peripheral edge of the annular plate element (61).

2. A release bearing according to Claim 1, characterised in that the plate element (61) includes an axially oriented annular projecting element (120, 122) which serves to centre the outer body (5).

3. A release bearing according to Claim 2, characterised in that the said projecting element (120, 122) is received in a complementary notch (124) formed in the rear annular transverse face (108) of the outer body (5), and in that the plate element (61) is extended beyond its projecting element (120, 122), in a direction away from the piston (4), by a sleeve portion (162) received in a concave cylindrical seating (126) formed in the said fixed part (21).

4. A release bearing according to any one of the preceding Claims, characterised in that an annular sealing ring (124) is interposed between the portions, facing each other, of the annular plate element (61) and outer body (5, 108).

5. A release bearing according to any one of Claims 1 to 4, characterised in that the outer body (5) is stepped so as to define a transverse shoulder (54), and has a tubular portion (52) for centring a preloading spring (7) which acts between the shoulder (54) of the outer body (5) and a shoulder of an annular plate element (41) of the piston (4).

6. A release bearing according to Claim 5, characterised in that the internal support tube (6) carries an end stop (9, 190) for limiting the displacement of the piston (4) and for forming, before the clutch release bearing (2) is mounted on its fixed part (21), a unitary assembly by virtue of the preloading spring (7) maintaining the piston (4) in contact with the said end stop (9, 190) and the outer body (5) in contact with the plate element (61) of the internal support tube (6).
